# EUROPÄISCHE PATENTSCHRIFT

(11) **EP 3 501 882 B1**
(45) Veröffentlichungstag und Bekanntmachung des Hinweises auf die Patenterteilung: **30.12.2020**
(21) Anmeldenummer: 18020408.3
(22) Anmeldetag: 23.08.2018
(51) Int. Cl.: B60L 53/14, B60L 53/30

(54) **TRANSFORMATORVORRICHTUNG FÜR EINE LADESTATION ZUM ELEKTRISCHEN LADEN VON FAHRZEUGEN MIT WENIGSTENS ZWEI LADEPUNKTEN**
TRANSFORMER DEVICE FOR A CHARGING STATION FOR ELECTRIC VEHICLES WITH AT LEAST TWO LOAD POINTS
DISPOSITIF TRANSFORMATEUR POUR UNE STATION DE CHARGE DESTINÉ AU CHARGE ÉLECTRIQUE DES VÉHICULES À AU MOINS DEUX POINTS DE CHARGE

(30) Priorität: 19.12.2017 DE 102017130471
(43) Veröffentlichungstag der Anmeldung: 26.06.2019
(73) Patentinhaber: Dr. Ing. h.c. F. Porsche AG, 70435 Stuttgart (DE)
(72) Erfinder: Götz, Stefan, 85659 Forstern (DE); Roggendorf, Christoph, 71706 Markgröningen (DE)

(56) Entgegenhaltungen:
- WO-A1-2013/135689
- DD-A3- 251 057
- DE-A1- 1 925 095
- DE-A1- 4 233 898
- DE-A1-102015 110 023
- US-A- 2 710 380
- US-A- 3 183 465
- US-A- 3 252 117

## Beschreibung

Die vorliegende Erfindung betrifft eine Transformatorvorrichtung einer Ladestation zum elektrischen Laden von Fahrzeugen sowie ein Verfahren zur Herstellung einer solchen Transformatorvorrichtung. Ferner betrifft die Erfindung eine Ladestation zum elektrischen Laden von Fahrzeugen mit einer solchen Transformatorvorrichtung.

Es ist bekannt, dass Transformatorvorrichtungen eingesetzt werden, um Ladestationen mit Leistung in Form von elektrischem Strom zu versorgen. Solche Ladestationen dienen dem Laden von elektrisch angetriebenen Fahrzeugen bzw. der Batterievorrichtung derselben. Solche Ladestationen sind, ähnlich wie die bereits bekannten Tankstellen, üblicherweise mit zwei oder mehr Ladepunkten ausgestattet. An jedem Ladepunkt kann zumindest ein Fahrzeug gleichzeitig geladen werden. Das bedeutet also, dass an einer Ladestation mit wenigstens zwei Ladepunkten auch wenigstens zwei Fahrzeuge zeitlich parallel über die Transformatorvorrichtung geladen werden können. Die Transformatorvorrichtung dient dabei dazu, den zur Verfügung stehenden elektrischen Strom in einer Form, welche zum elektrischen Laden der Fahrzeuge geeignet ist, und bei Bedarf eine galvanische Trennung bereitzustellen.

Heutige Elektrofahrzeuge erlauben in der Regel zwei Lademodi. Für ein Laden an einem gewöhnlichen Wechselspannungs- oder Drehstromanschluss verfügt ein Fahrzeug über ein Onboard-Ladegerät, das sowohl eine nötige Wandlung in Gleichstrom vornimmt als auch den jeweiligen Ladebetrieb steuert. Dieser AC-Lademodus ist jedoch aufgrund der verfügbaren Anschlussleistung, die in der Regel nicht mehr als 16 A oder 32 A beträgt, und aufgrund der Installation des Ladegerätes mit ausreichend Leistung in der Ladegeschwindigkeit enorm eingeschränkt. Hieraus ergeben sich bei heutigen Elektrofahrzeugen Ladezeiten von mehreren Stunden je 100 km. Aufgrund der hohen Ladezeiten für AC-Laden wurde DC-Schnellladen vorzugsweise mit Gleichspannung entwickelt. Im Gegensatz zum AC-Laden werden die zum Laden hierzu nötigen elektrischen Betriebsmittel und Komponenten nicht im Fahrzeug mitgeführt, sondern von einer fahrzeugexternen Ladesäule bereitgestellt. Die Ladesäule führt den Ladevorgang durch und formt auf Anforderung des Fahrzeuges Spannung und Strom so, wie es für das Laden der jeweiligen Fahrzeugbatterie notwendig ist. Entsprechend vorgesehene DC-Ladeleitungen werden während des Ladevorganges durch diverse Schütze im Fahrzeug elektrisch mit den Polen der Hochvoltbatterie des Fahrzeuges verbunden. Die Leistungen gebräuchlicher DC-Ladestationen beträgt derzeit typischerweise bis zu 50 kW und werden in der Regel direkt aus dem Niederspannungsnetz oder Ortsnetz entnommen. Wünschenswert wären allerdings Ladeleistungen von mehr als 300 kW, um Ladegeschwindigkeiten von mehr als 20 km/min zu überbieten. Ferner sind Ladespannungen von bis zu 1000 V erstrebenswert, um Batterien zukünftiger Fahrzeuge mit 600 V oder gar über 800 V Batteriespannung zu laden und höhere Ladeleistungen bei geringen Ladeströmen zu erreichen. Beispielhafte Details zum DC-Laden sind unter anderem in IEC 61851 beschrieben. Zur Ladung von Fahrzeugen mit mehr als 300 kW Leistung ist eine Entnahme der Energie aus dem Niederspannungsnetz oder Ortsnetz der Netzstabilität nicht förderlich und ein Anschluss an das Mittelspannungsverteilnetz oder gar das Hochspannungsnetz bietet deutliche Vorteile.

Die Patentanmeldeschrift DE 10 2012 212 291 beschreibt ein System zum elektrischen Gleichspannungsladen, das zumindest ein DC/DC-Stellermodul umfassend ein DC/DC-Tiefsetzmodul ohne galvanische Trennung und ein DC/DC-Resonanzwandlermodul mit galvanischer Trennung aufweist.

Die Patentanmeldeschriften DE 10 2015 110 023 und DE 10 2016 123 924 beschreiben Vorrichtungen zur Gleichspannungsladung von elektrischen Fahrzeugen, die in Fachkreisen als *split powerline* firmieren. Hierbei wird die gewünscht galvanische Trennung der einzelnen Ladeanschlüsse oder Ladepunkte eines Ladeparks vom Energienetz und untereinander durch einen Transformator mit separaten ungeerdeten Sekundärwicklungen erreicht. Der Vorteil dieser Technologie liegt in der möglichen Nutzung von kosten- und bauraumgünstigen nicht galvanisch trennenden Betriebsmitteln wie beispielsweise Gleichrichtern, AC/DC-Wandlern und DC/DC-Wandlern im Anschluss an die jeweiligen Sekundärwicklungen. Der genannte Transformator kann dabei mit entsprechenden Wickelverhältnissen aus Nieder-, Mittel- oder Hochspannung gespeist werden.

Nachteilhaft bei den bekannten Lösungen ist es, dass in Abhängigkeit der Anzahl der Ladepunkte die Komplexität, die Kosten und die Größe der Transformatorvorrichtungen überproportional ansteigen. Dies beruht insbesondere auf der Tatsache, dass bei einer Ladestation für zwei oder mehr Fahrzeuge häufig unsymmetrische Ladesituationen stattfinden können. Unter einer unsymmetrischen Ladesituation ist eine Situation zu verstehen, in welcher beispielsweise an einem ersten Ladepunkt ein Fahrzeug zum elektrischen Laden angeordnet ist, während ein zweiter Ladepunkt frei bleibt. Das bedeutet also, dass mithilfe einer gemeinsamen Transformatorvorrichtung, insbesondere einer gemeinsamen Transformatorvorrichtung im Sinne der Split-Powerline-Technologie, in unsymmetrischer Weise ein erster Ladepunkt vollständig mit Ladeleistung versorgt wird, während der andere Ladepunkt keine Ladeleistung abnimmt. Diese asymmetrische Belastung stellt Probleme für die Effizienz und in Form lokaler Erwärmung der gemeinsamen Transformatorvorrichtung dar. Ferner können sich bei asymmetrischer Belastung die Impedanzen der Wicklungen verändern. Diese Asymmetrie muss in konstruktiver Weise in der Transformatorvorrichtung ausgebildet werden, wodurch dieser überproportional groß, teuer und kompliziert aufgebaut wird. Ferner muss die Asymmetrie in der Steuerung des Systems berücksichtig werden, die hierfür auf umfangreiche Sensorik angewiesen ist und zusätzliche Komplexität und Kosten verursacht.

DE 42 33 898 A1 offenbart eine Transformatorvorrichtung mit einem Eingangsanschluss für den elektrischen Anschluss an eine elektrische Leistungsquelle. Weiter weist die Transformatorvorrichtung eine Primärwicklung und Sekundärwicklungen auf. Die Sekundärwicklungen sind voneinander galvanisch getrennt und weisen jeweils mindestens einen elektrisch parallel und/oder seriell geschalteten Wicklungsabschnitt auf. Benachbarte Wicklungsabschnitte mindestens einer Sekundärwicklung sind in einer axialen Richtung abschnittsweise miteinander überlappend ausgeführt.

DE 10 2015 110 023 A1 offenbart eine Ladestation zum elektrischen Laden von Fahrzeugen mit mehreren Ladepunkten. Die Ladestation weist Transformatorvorrichtung auf. Die Transformatorvorrichtung weist einen Eingangsanschluss für den elektrischen Anschluss an eine elektrische Leistungsquelle auf. Die Transformatorvorrichtung weist eine Primärwicklung und Sekundärwicklungen auf.

DE 19 25 095 A1 offenbart eine Wicklung für elektrische Geräte hoher Ströme. Wicklungsleiter sind aus mehreren Einzeleitern hergestellt. Um Ausgleichsströme zwischen den Einzeleitern zu verkleinern, sind die Einzeleiter verdrillt.

WO 2013/135689 A1 offenbart eine Transformatorvorrichtung eines Fahrzeugs mit Primärwicklungen und Sekundärwicklungen.

DD 251 057 A3 offenbart eine Wicklungsanordnung für Transformatoren mit einer Primärwicklung und einer Sekundärwicklung.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Transformatorvorrichtung zur Verfügung zu stellen, für eine größere Anzahl von Ladepunkten an einer Ladestation.

Die voranstehende Aufgabe wird gelöst durch eine Transformatorvorrichtung mit den Merkmalen des Anspruchs 1, eine Ladestation mit den Merkmalen des Anspruchs 8 und ein Verfahren mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Transformatorvorrichtung beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Erfindungsgemäß wird eine Transformatorvorrichtung einer Ladestation vorgeschlagen zum elektrischen Laden von Fahrzeugen mit wenigstens zwei Ladepunkten. Hierfür ist die Transformatorvorrichtung mit einem Eingangsanschluss für den elektrischen Anschluss an eine elektrische Leistungsquelle, beispielsweise ein Energienetz mit Wechsel- oder Drehstrom, ausgestattet. Weiter weist die Transformatorvorrichtung eine Primärwicklung und wenigstens einer Sekundärwicklung für jeden Ladepunkt auf. Die Sekundärwicklungen sind voneinander galvanisch getrennt und weisen jeweils mindestens zwei elektrisch parallel und/oder seriell geschalteten Wicklungsabschnitt auf. Weiter sind benachbarte Wicklungsabschnitte der Sekundärwicklungen in einer axialen Richtung wenigstens abschnittsweise miteinander überlappend ausgeführt. Ferner sind die Sekundärwicklungen mit sich selbst in radialer Richtung überlappungsfrei ausgebildet. Die Reihenfolge der Überlappung benachbarter Sekundärwicklungen in radialer Richtung ändert sich in axialer Richtung.

Am Eingangsanschluss wird ein Netz angeschlossen, am Ausgang N Gleichrichter und DC-Wandler für M Ladepunkte

Die Primärwicklung ist bei einer erfindungsgemäßen Ausgestaltung vorzugsweise mit der Sekundärwicklung magnetisch gekoppelt. Insbesondere weist die Sekundwärwicklung wenigstens zwei Wicklungsabschnitte auf.

Eine erfindungsgemäße Transformatorvorrichtung basiert also auf den bekannten Lösungen und dient dazu, eine Ladestation mit der Möglichkeit zum elektrischen Laden von Fahrzeugen an wenigstens zwei Ladepunkten auszustatten. Hierfür ist die Transformatorvorrichtung zu allererst mit einem Eingangsanschluss ausgestattet. Dieser Eingangsanschluss dient dazu, mithilfe einer elektrischen Stromquelle, also zum Beispiel einem Anschluss an das elektrische Stromnetz oder einer großen Batterievorrichtung, eine elektrische Leistungsquelle zur Verfügung zu stellen. Der wesentliche Erfindungsgedanke beruht dabei auf der Ausgestaltung der. Sekundärwicklungen.

Für jeden Ladepunkt ist zumindest eine Sekundärwicklung vorgesehen. Jedoch können auch zwei oder mehr Sekundärwicklungen parallel geschaltet sein oder werden, um einen einzigen Ladepunkt mit einer elektrischen Leistung zu versorgen. Der Kerngedanke der vorliegenden Erfindung basiert dabei auf der Art und Weise, wie bei der Sekundärwicklung diese in Relation zur benachbarten Sekundärwicklung angeordnet ist. Ublicherweise sind die Sekundärwicklungen streng parallel zueinander gewickelt. Das bedeutet also, dass für einen ersten Ladepunkt eine erste Sekundärwicklung radial um den Kern der Transformatorvorrichtung gewickelt ist. In einer axialen Richtung davon beabstandet bzw. benachbart befindet sich nun die zweite Sekundärwicklung für einen zweiten elektrischen Ladepunkt usw. Eine entsprechende Unsymmetrie bei Ladesituation führt bei den bekannten Lösungen dazu, dass unerwünschte Nebenströme bzw. Ausgleichsströme und ferner lokale Erhitzung bis zur Zerstörung entstehen können, welche die erläuterten Nachteile mit sich bringen.

Der Erfindungskerngedanke ist es nun, die Sekundärwicklungen gerade nicht mehr in axialer Richtung parallel nebeneinander und strikt voneinander getrennt aufzuwickeln. Vielmehr wird trotz der vorhandenen galvanischen Trennung und der elektrischen Parallelschaltung eine zumindest abschnittsweise überlappende Wicklung für die Sekundärwicklungen zur Verfügung gestellt. Das bedeutet also, dass eine erste Sekundärwicklung zumindest teilweise überlappend über eine zweite Sekundärwicklung einer benachbarten bzw. eines anderen Ladepunktes übergewickelt wird. Es entsteht also das später noch näher erläuterte Flechtwerk, bei welcher in radialer und axialer Richtung unterschiedliche Sekundärwicklungen überlappend übereinander angeordnet sind.

Durch die voranstehend beschriebene überlappende bzw. zumindest abschnittsweise überlappende Ausgestaltung und Ausbildung der einzelnen Sekundärwicklungen wird eine Vielzahl von Vorteilen erreicht. Ein entscheidender Vorteil ist es dabei, dass durch dieses ausgleichende Wickelverfahren, also die überlappende Anordnung benachbarter Sekundärwicklungen, Ausgleichsströme zwischen den Sekundärwicklungen insbesondere auch in unsymmetrischen Ladesituationen reduziert bzw. auf ein Minimum reduziert werden. Auch wird eine Homogenisierung von Impedanzen erzeugt, welche ebenfalls insbesondere bei unsymmetrischen Ladesituationen auftritt. Mit anderen Worten wird nun durch die zumindest abschnittsweise überlappende Anordnung benachbarter Sekundärwicklungen sozusagen ein konstruktives Wickelkonzept zur Verfügung gestellt, welches auf konstruktiver Ebene bzw. auf Wicklungsebene bereits eine homogenisierende Wirkung für die Impedanz und eine vermeidende Wirkung für Ausgleichströme zur Verfügung stellt. Das bedeutet mit anderen Worten, dass auch bei unsymmetrischen Ladesituationen an unterschiedlichen Ladepunkten die Unsymmetrie auf elektrischer Ebene durch dieses konstruktive Konzept ausgeglichen bzw. minimiert worden ist. Mit anderen Worten kann nun in Unabhängigkeit der tatsächlichen Ladesituation auf ein kleines, kompaktes, kostengünstiges und energieeffizientes Konzept für die Transformatorvorrichtung zurückgegriffen werden. Transformatorvorrichtungen im Sinne der vorliegenden Erfindung können somit auch für eine große Anzahl von Ladepunkten eingesetzt werden, da bereits durch das Konzept der zumindest abschnittsweise überlappenden Wicklung die unsymmetrischen, insbesondere hoch unsymmetrischen Ladesituationen berücksichtigt worden sind.

Die Axialrichtung ist dabei im Sinne der vorliegenden Erfindung insbesondere die Axialrichtung des Kerns der Transformatorvorrichtung, um welchen die entsprechenden Sekundärwicklungen gerichtet sind. Im einfachsten Fall ist die Axialrichtung dabei die Kernachse bzw. die Wicklungsachse der Sekundärwicklungen und als Gerade oder im Wesentlichen als Gerade ausgebildet. Die Radialrichtung im Sinne der vorliegenden Erfindung liegt insbesondere senkrecht zur Axialrichtung weist im einfachsten Fall durch den Schwerpunkt des Querschnittes des jeweiligen Schenkels des Transformatorkernes.

Bei der erfindungsgemäßen Transformatorvorrichtung sind die Sekundärwicklungen mit sich selbst in Radialrichtung überlappungsfrei ausgebildet. Das bedeutet, dass die Sekundärwicklung bei einer Umdrehung der Wicklung um die Kernachse bzw. um die Axialrichtung herum einen so großen axialen Abstand aufnimmt, dass sie komplett neben sich und damit überlappungsfrei zu liegen kommt. Die Spreizung in axialer Richtung wird damit so groß, dass die Sekundärwicklung überlappungsfrei im Vergleich zu sich selbst und im Wesentlichen vollständig überlappend mit benachbarten Sekundärwicklungen ausgebildet wird. Die beschriebenen Vorteile, insbesondere die Homogenisierung von Impedanzen wie auch das Vermeiden von Ausgleichsströmen wird auf diese Weise noch deutlich verbessert. Es kann dabei vorteilhafterweise auch ein Sicherheitsabstand bzw. das Verwenden von isolierenden Bauteilen in axialer Richtung zwischen den Sekundärwicklungen eingesetzt werden, um die erfindungsgemäßen Vorteile noch weiter zu verbessern und die Aufteilung in axialer Richtung noch exakter auszugestalten.

Bei der erfindungsgemäßen Transformatorvorrichtung ist vorgesehen, dass die Reihenfolge der Überlappung benachbarter Sekundärwicklungen in radialen Richtung sich in axialer Richtung ändert, insbesondere die Sekundärwicklungen miteinander verflochten, vorzugsweise helixförmig verflochten sind. Darunter ist zu verstehen, dass sich sozusagen in axialer Richtung axiale Packungsabschnitte ausbilden, welche die jeweilige Packung unterschiedlicher Sekundärwicklungen in radialer Richtung aufeinanderliegend darstellen. In axialer Richtung liegen nun diese radialen Packungsabschnitte nebeneinander, wobei für jeden benachbarten radialen Packungsabschnitt eine unterschiedliche Schichtung der einzelnen Sekundärwicklungen vorliegt. Jede Schicht entspricht dabei einer Sekundärwicklung, wobei in Richtung der axialen Richtung die einzelnen Schichten der Sekundärwicklung von innen nach außen bzw. von außen nach innen wandern. Es entsteht also ein doppeltes bzw. ein mehrfaches Überlappen, so dass insbesondere im Querschnitt sich eine matrixförmige Ausgestaltung ausgibt. So sind beispielsweise bei drei benachbarten Sekundärwicklungen in überlappender Ausgestaltungsweise Querschnitte denkbar, bei welchem drei radiale Packungspakete nebeneinander angeordnet sind, so dass sich eine 3x3-Matrix ausgestalten lässt. Diese Reihenfolge der Überlappung benachbarter Sekundärwicklungen erfolgt insbesondere unter der Beachtung der bereits besprochenen galvanischen Trennung der einzelnen Sekundärwicklungen voneinander.

Ebenfalls von Vorteil kann es sein, wenn bei einer erfindungsgemäßen Transformatorvorrichtung jede Sekundärwicklung wenigstens zwei axial beabstandete Axialabschnitte und wenigstens zwei radial beabstandete Radialabschnitte aufweist. Dies basiert insbesondere auf einer Ausgestaltungsform der beiden voranstehenden Absätze, bei welcher das beschriebene Verflechten bzw. helixförmige Verflechten benachbarter Sekundärwicklungen zur Verfügung gestellt wird. Die Abschnitte der unterschiedlichen Sekundärwicklungen können dabei zueinander komplementär oder im Wesentlichen komplementär ausgestaltet werden. Bei jeder Umwicklung entsteht also im Sinne des Querschnittes ein neuer Axialabschnitt und/oder ein neuer Radialabschnitt der Sekundärwicklung. Betrachtet man ausschließlich den Querschnitt durch mehrere benachbarte Sekundärwicklungen, so führt dies zur beschriebenen Matrixform im Querschnitt mit jeweils zum Beispiel drei Radialabschnitten und drei Axialabschnitten von insgesamt drei Sekundärwicklungen, die gemeinsam für die drei Radialpakete eine 3x3-Matrix ausbilden.

Ein weiterer Vorteil ist erzielbar, wenn bei einer erfindungsgemäßen Transformatorvorrichtung die drei Sekundärwicklungen mit ihren Axialabschnitten und ihren Radialabschnitten ein Sekundärwicklungspaket ausbilden. Auch hier kann dieses Sekundärwicklungspaket im Querschnitt wieder als 3x3-Matrix ausgebildet sein. Sofern eine größere Anzahl als drei Sekundärwicklungen zur Verfügung gestellt wird, um ein solches Sekundärwicklungspaket auszubilden, erhöht sich die dementsprechend die Anzahl in der Querschnittsmatrix. Bevorzugt wird dabei auf eine gleichmäßige Anzahl in der Matrix geachtet, so dass beispielsweise eine 2x2-Matrix, eine 3x3-Matrix, eine 4x4-Matrix oder eine 5x5-Matrix oder ähnlich zur Verfügung gestellt wird.

Von Vorteil ist es darüber hinaus, wenn bei einer erfindungsgemäßen Transformatorvorrichtung wenigstens zwei Sekundärwicklungen ein Sekundärwicklungspaket ausbilden, wobei in axialer Richtung zumindest zwei Sekundärwicklungspakete nebeneinander angeordnet sind. Die Sekundärwicklungspakete können dabei ausgestaltet sein, wie sie im voranstehenden Absatz erläutert worden sind. Das Verwenden von zwei oder mehr Sekundärwicklungspakten in axialer Richtung nebeneinander führt sozusagen zu einem modularen Aufbau der Transformatorvorrichtung. Die Sekundärwicklungspakete bilden dabei ein Sekundärwicklungsmodul aus, wobei beispielsweise bei einer Querschnittsmatrix von 3x3 das Sekundärwicklungspaket für drei Ladepunkte für dieses Modul zur Verfügung gestellt werden kann. Die Transformatorvorrichtung kann nun modular so aufgebaut sein, dass durch das axiale Aneinanderreihen von mehreren Sekundärwicklungspaketen für jedes zusätzliche Sekundärwicklungspaket mit gleicher Ausgestaltungsform der Ladestation nun drei zusätzliche Ladepunkte hinzugefügt werden können. Soll beispielsweise die Transformatorvorrichtung mit einer Ladefunktionalität für neun Ladepunkte ausgestaltet werden, so wird für diese Ladestation die Transformatorvorrichtung mit drei Modulen mit entsprechend drei Sekundärwicklungspaketen mit jeweils einer 3x3-Matrix im Querschnitt für die Sekundärwicklungen zur Verfügung gestellt. Die Modularität führt zu einer weiteren Reduktion von Kosten und Bauraum bei einer erfindungsgemäßen Transformatorvorrichtung.

Die Transformatorvorrichtung des voranstehenden Absatzes lässt sich nun dahingehend weiterbilden, dass für jedes Sekundärwicklungspaket eine separate Primärwicklung ausgebildet ist. Diese separate Primärwicklung erlaubt es, dass die Modularität nicht nur bei der Sekundärwicklung, sondern auch bei der Primärwicklung zur Verfügung gestellt ist. Damit lässt sich die gesamte Transformatorvorrichtung, insbesondere, wenn für jedes Sekundärwicklungspaket im nachfolgenden Anspruch auch noch ein eigener Eingangsanschluss ausgebildet ist, in der Kombination als abgeschlossenes Modul zur Verfügung stellen. Die Transformatorvorrichtung wird damit deutlich flexibler ausprägbar, so dass sie im Wesentlichen beliebig an unterschiedliche Einsatzsituationen bei unterschiedlichsten Ladestationen angepasst werden kann.

Ein weiterer Vorteil ist es, wenn bei der Transformatorvorrichtung der beiden voranstehenden Absätze für jedes Sekundärwicklungspaket ein eigener Eingangsanschluss ausgebildet ist. Wie bereits im voranstehenden Absatz erläutert worden ist, wird die Flexibilität im Einsatz des modularen Aufbaus der Transformatorvorrichtung damit noch weiter verbessert. Insbesondere kann dies kombiniert werden mit einer festen Verschaltung der Eingangsanschlüsse in axialer Richtung übereinander, so dass in einfacher elektrischer Montageweise zwei oder auch mehr Sekundärwicklungspakete mit eigenen Eingangsanschlüssen und vorzugsweise auch mit eigenen separaten Primärwicklungen in axialer Richtung elektrisch miteinander verbunden und zu einer gemeinsamen Transformatorvorrichtung ausgestaltet werden können.

Ebenfalls Gegenstand der vorliegenden Erfindung ist ein Verfahren für die Herstellung einer Transformatorvorrichtung gemäß der vorliegenden Erfindung, aufweisend die folgenden Schritte:
- Ausbilden einer Primärwicklung in elektrisch leitender Verbindung mit einem Eingangsanschluss,
- Ausbilden wenigstens einer Sekundärwicklungen für jeden der wenigstens zwei Ladepunkte, wobei die Sekundärwicklungen jeweils mindestens zwei elektrisch parallel und/oder seriell geschaltete Wicklungsabschnitte aufweisen, wobei benachbarte Wicklungsabschnitte in axialer Richtung wenigstens abschnittsweise überlappen, wobei die Sekundärwicklungen voneinander galvanisch getrennt sind und mit sich selbst in radialer Richtung überlappungsfrei ausgebildet sind, und wobei die Reihenfolge der Überlappung benachbarter Sekundärwicklungen in radialer Richtung sich in axialer Richtung ändert.

Durch die Ausbildung einer erfindungsgemäßen Transformatorvorrichtung bringt ein erfindungsgemäßes Verfahren die gleichen Vorteile mit sich, wie sie ausführlich mit Bezug auf eine erfindungsgemäße Transformatorvorrichtung erläutert worden sind.

Ein erfindungsgemäßes Verfahren lässt sich dahingehend weiterbilden, dass wenigstens zwei Sekundärwicklungen gemeinsam als Sekundärwicklungspaket ausgebildet werden, wobei wenigstens zwei Sekundärwicklungspakete in axialer oder radialer Richtung nebeneinander angeordnet werden. Wie bereits erläutert worden ist, können Sekundärwicklungspakete als Module der Transformatorvorrichtung verstanden werden. Die axiale oder radiale Aneinanderreihung von zwei oder mehr solchen Modulen in Form von zwei oder mehr solchen Sekundärwicklungspaketen im Rahmen des vorliegenden Verfahrens zeigt einmal mehr die Flexibilität und die Möglichkeit, mithilfe eines erfindungsgemäßen Verfahrens auch große und komplexe Ladestationen mit einer Vielzahl von Ladepunkten mithilfe eines einfachen Montageverfahrens und die axiale oder radiale Aneinanderreihung der Module mit der erfindungsgemäßen Transformatorvorrichtung auszustatten.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Fig. 1: eine erste Ausführungsform einer erfindungsgemäßen Transformatorvorrichtung,
- Fig. 2: eine weitere Ausführungsform einer erfindungsgemäßen Transformatorvorrichtung während eines ersten Verfahrensschritts,
- Fig. 3: die Ausführungsform der Fig. 2 während eines zweiten Verfahrensschritts,
- Fig. 4: die Ausführungsformen der Fig. 2 und 3 nach Beendigung des Verfahrens, und
- Fig. 5: eine erfindungsgemäße Transformatorvorrichtung in einer weiteren Ausführungsform.

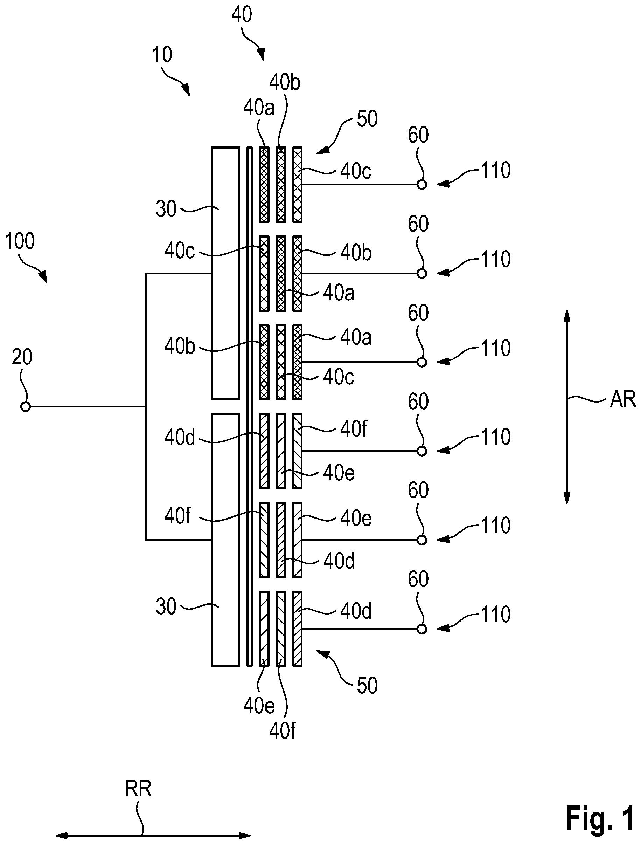

Die Fig. 1 zeigt schematisch, wie eine Transformatorvorrichtung 10 der vorliegenden Erfindung aufgebaut werden kann, um eine Ladestation 100 hier mit insgesamt sechs Ladepunkten 110 auszustatten. Die Transformatorvorrichtung 10 ist dabei mit einem einzigen Eingangsanschluss 20 ausgestaltet, welcher mit einer entsprechenden elektrischen Leistungsquelle verbindbar ist. Ausgehend von dieser elektrischen Leistungsquelle erfolgt nun eine Aufteilung und Anpassung der elektrischen Leistung auf die einzelnen, in diesem Fall sechs Stück, Ladepunkte 110 und den zugehörigen Ausgangsanschlüssen 60. Diese Aufteilung wird hier modulweise mit zwei separaten Modulen, einem oberen Modul und einem unteren, und damit auch mit einer oberen Primärwicklung 30 und einer unteren Primärwicklung 30 zur Verfügung gestellt. In radialer Richtung nach rechts anschließend zu den beiden Primärwicklungen 30 sind nun in jedem Modul im Querschnitt zwei 3x3-Matrizen vorgesehen. Jedes der beiden Sekundärwicklungspakete 50 ist hier mit Sekundärwicklungen 40 ausgestattet. Das obere Sekundärwicklungspaket 50 weist dabei die Sekundärwicklungen 40a, 40b und 40c auf. Das untere Sekundärwicklungspaket ist mit den Sekundärwicklungen 40d, 40e und 40f ausgestattet. Die Aufteilung ist hier gut zu erkennen, da es sich im Querschnitt der 3x3-Matrix in einer Axialrichtung AR eine überlappende Ausgestaltung ausbildet, wobei immer benachbarte Sekundärwicklungen 40 miteinander in dem jeweiligen Sekundärwicklungspaket 50 überlappen. Damit ergibt sich in der radialen Richtung RR ein entsprechend radialer Aufbau, welcher zu der beschriebenen 3x3-Matrix führt.

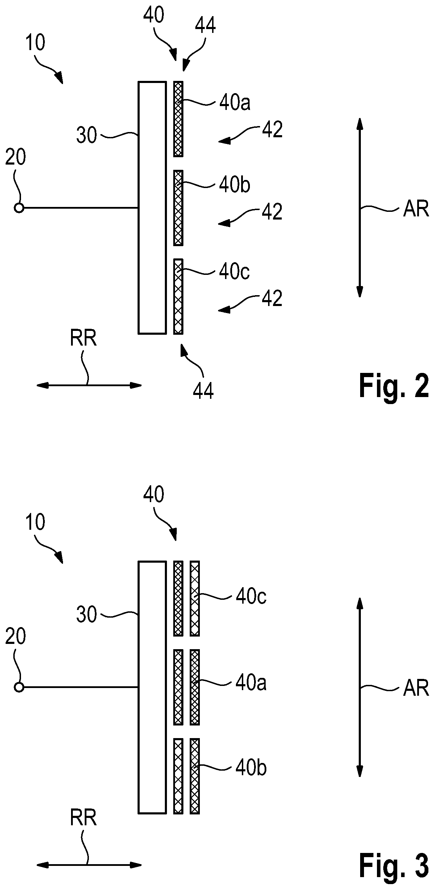

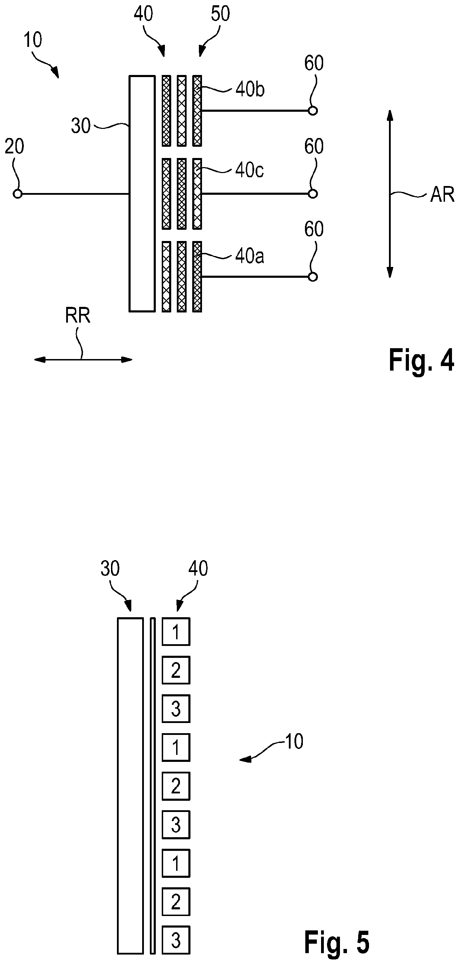

In den Fig. 2 bis 4 ist schematisch dargestellt, wie die Herstellung einer erfindungsgemäßen Transformatorvorrichtung 10 bzw. eines einzelnen Sekundärwicklungspaketes 50 erfolgen kann. Beim Wickeln um die Primärwicklung 30, ausgehend vom Eingangsanschluss 20, sind nun hier wieder die drei Sekundärwicklungen 40a, 40b und 40c in der ersten Wicklung zu erkennen. Dabei wird hier jeweils ein Axialabschnitt 42 in axialer, Richtung AR nebeneinander angeordnet. Bei der einmaligen Umdrehung um die axiale Richtung AR wird nun ein axialer Versatz durchgeführt, so dass nun der erste Sekundärwicklungsabschnitt 40a von oben in axialer Richtung AR nach unten wandert, und nun auf der inneren Wicklung der Sekundärwicklung 40c zu liegen kommt. Gleiches gilt auch mit der untersten Sekundärwicklung 40b, die nun ebenfalls in axialer Richtung AR nach unten gewandert ist. Diese zweite Wicklungsebene ist in radialer Richtung RR nun eine Schichtebene nach außen geschoben. Dieser Schritt wird nun weiter nach außen fortgesetzt und kann zum Beispiel zur 3x3-Matrix-Ausbildung gemäß der Fig. 4 führen. Selbstverständlich kann für jeden Wicklungsabschnitt auch eine Vielzahl einzelner Wicklungen in einem Querschnittsabschnitt, also in einem Axialabschnitt 42 und/oder in einem Radialabschnitt 44 zur Verfügung gestellt werden. Abschließend werden die einzelnen Sekundärwicklungen 40 des Sekundärwicklungspakets 50 noch mit Ausgangsanschlüssen 60 ausgestattet, um für die einzelnen Ladepunkte 110 die elektrische Leistung an der Ladestation 100 zur Verfügung stellen zu können.

In der Fig. 5 ist eine weitere Variante dargestellt. Zur besseren Übersichtlichkeit sind die drei verschiedenen Sekundärwicklungen 40 hier mit den Ziffern 1, 2 und 3 gekennzeichnet. Hier ist gut die Alternative Anordnung in der axialen Richtung AR zu erkennen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Transformatorvorrichtung (10) einer Ladestation (100) zum elektrischen Laden von Fahrzeugen mit wenigstens zwei Ladepunkten (110),
aufweisend einen Eingangsanschluss (20) für den elektrischen Anschluss an eine elektrische Leistungsquelle,
weiter aufweisend eine Primärwicklung (30) und wenigsten eine Sekundärwicklung (40) für jeden Ladepunkt (110),
wobei die Sekundärwicklungen (40) voneinander galvanisch getrennt sind und jeweils mindestens zwei elektrisch parallel und/oder seriell geschaltete Wicklungsabschnitte aufweisen,
wobei benachbarte Wicklungsabschnitte der Sekundärwicklungen (40) in einer axialen Richtung (AR) wenigstens abschnittsweise miteinander überlappen,
**dadurch gekennzeichnet dass** die Sekundärwicklungen (40) mit sich selbst in radialer Richtung überlappungsfrei ausgebildet sind,
wobei die Reihenfolge der Überlappung benachbarter Sekundärwicklungen (40) in radialer Richtung (RR) sich in axialer Richtung (AR) ändert.

2. Transformatorvorrichtung (10) nach Anspruch 1, **dadurch gekennzeichnet, dass** die Sekundärwicklungen (40) miteinander verflochten, vorzugsweise helixförmig verflochten, sind.

3. Transformatorvorrichtung (10) nach einem der vorangegangenen Ansprüche, **dadurch gekennzeichnet, dass** jede Sekundärwicklung (40) wenigstens zwei axial beabstandete Axialabschnitte (42) und/oder wenigstens zwei radial beabstandete Radialabschnitte (44) aufweist.

4. Transformatorvorrichtung (10) nach Anspruch 3, **dadurch gekennzeichnet, dass** drei Sekundärwicklungen (40) mit ihren Axialabschnitten (42) und ihren Radialabschnitten (44) ein Sekundärwicklungspaket (50) ausbilden.

5. Transformatorvorrichtung (10) nach einem der vorangegangenen Ansprüche, **dadurch gekennzeichnet, dass** die wenigstens zwei Sekundärwicklungen (40) ein Sekundärwicklungspaket (50) ausbilden; wobei in axialer Richtung (AR) oder radialer Richtung (RR) zumindest zwei Sekundärwicklungspakete (50) nebeneinander angeordnet sind.

6. Transformatorvorrichtung (10) nach Anspruch 5, **dadurch gekennzeichnet, dass** für jedes Sekundärwicklungspaket (50) eine separate Primärwicklung (30) ausgebildet ist.

7. Transformatorvorrichtung (10) nach Anspruch 5 oder 6, **dadurch gekennzeichnet, dass** für jedes Sekundärwicklungspacket (50) ein eigener Eingangsanschluss (20) ausgebildet ist.

8. Ladestation (100) zum elektrischen Laden von Fahrzeugen mit wenigstens zwei Ladepunkten (110), **dadurch gekennzeichnet dass** die Ladestation (100) eine Transformatorvorrichtung (10) nach einem der Ansprüche 1 bis 7 aufweist.

9. Verfahren für die Herstellung einer Transformatorvorrichtung (10) einer Ladestation (100) zum elektrischen Laden von Fahrzeugen mit wenigstens zwei Ladepunkten (110) mit den Merkmalen eines der Ansprüche 1 bis 8, aufweisend die folgenden Schritte:
Ausbilden einer Primärwicklung (30) in elektrisch leitender Verbindung mit einem Eingangsanschluss (20),
Ausbilden wenigstens einer Sekundärwicklung (40) für jeden der wenigstens zwei Ladepunkte (110), wobei die Sekundärwicklungen (40) jeweils mindestens zwei elektrisch parallel und/oder seriell geschaltete Wicklungsabschnitte aufweisen, wobei benachbarte Wicklungsabschnitte in axialer Richtung (AR) wenigstens abschnittsweise überlappen, **dadurch gekennzeichnet dass** die Sekundärwicklungen (40) voneinander galvanisch getrennt und mit sich selbst in radialer Richtung überlappungsfrei ausgebildet sind, und wobei die Reihenfolge der Überlappung benachbarter Sekundärwicklungen (40) in radialer Richtung (RR) sich in axialer Richtung (AR) ändert.

10. Verfahren nach Anspruch 9, **dadurch gekennzeichnet, dass** wenigstens zwei Sekundärwicklungen (40) gemeinsam als Sekundärwicklungspaket (50) ausgebildet werden, wobei wenigstens zwei Sekundärwicklungspakete (50) in axialer Richtung (AR) oder radialer Richtung (RR) nebeneinander angeordnet werden.

## Claims

1. Transformer device (10) of a charging station (100) for electrically charging vehicles with at least two charging points (110),
having an input connection (20) for electrical connection to an electrical power source,
also having a primary winding (30) and at least one secondary winding (40) for each charging point (110), wherein the secondary windings (40) are DC isolated from one another and each have at least two winding sections which are connected electrically in parallel and/or in series,
wherein adjacent winding sections of the secondary windings (40) overlap one another at least partially in an axial direction (AR),
**characterized in that** the secondary windings (40) are formed so as to be free of overlap with one another in a radial direction,
wherein the sequence of the overlap of adjacent secondary windings (40) in a radial direction (RR) changes in an axial direction (AR).

2. Transformer device (10) according to Claim 1, **characterized in that** the secondary windings (40) are interwoven with one another, preferably interwoven in a helix shape.

3. Transformer device (10) according to one of the preceding claims, **characterized in that** each secondary winding (40) has at least two axially spaced-apart axial sections (42) and/or at least two radially spaced-apart radial sections (44).

4. Transformer device (10) according to Claim 3, **characterized in that** three secondary windings (40) form a secondary winding package (50) with their axial sections (42) and their radial sections (44).

5. Transformer device (10) according to one of the preceding claims, **characterized in that** the at least two secondary windings (40) form a secondary winding package (50), wherein at least two secondary winding packages (50) are arranged next to one another in an axial direction (AR) or a radial direction (RR).

6. Transformer device (10) according to Claim 5, **characterized in that** a separate primary winding (30) is formed for each secondary winding package (50).

7. Transformer device (10) according to Claim 5 or 6, **characterized in that** a separate input connection (20) is formed for each secondary winding package (50).

8. Charging station (100) for electrically charging vehicles having at least two charging points (110), **characterized in that** the charging station (100) has a transformer device (10) according to one of Claims 1 to 7.

9. Method for manufacturing a transformer device (10) of a charging station (100) for electrically charging vehicles having at least two charging points (110) with the features of one of Claims 1 to 8, comprising the following steps:
forming a primary winding (30) in an electrically conductive connection to an input connection (20), forming at least one secondary winding (40) for each of the at least two charging points (110), wherein the secondary windings (40) each have at least two winding sections which are connected electrically in parallel and/or in series, wherein adjacent winding sections overlap at least partially in an axial direction (AR), **characterized in that** the secondary windings (40) are DC isolated from one another and are formed so as to be free of overlap with one another in a radial direction, and wherein the sequence of the overlap of adjacent secondary windings (40) in a radial direction (RR) changes in an axial direction (AR).

10. Method according to Claim 9, **characterized in that** at least two secondary windings (40) are formed together as a secondary winding package (50), wherein at least two secondary winding packages (50) are arranged next to one another in an axial direction (AR) or a radial direction (RR) .

## Revendications

1. Dispositif transformateur (10) d'une station de charge (100) destiné au chargement électrique de véhicules avec au moins deux points de charge (110), présentant une borne d'entrée (20) pour la connexion électrique à une source de puissance électrique, présentant en outre un enroulement primaire (30) et au moins un enroulement secondaire (40) pour chaque point de charge (110),
les enroulements secondaires (40) étant isolés galvaniquement les uns par rapport aux autres et présentant respectivement au moins deux sections d'enroulement électriquement connectées en parallèle et/ou en série,
des sections d'enroulement voisines des enroulements secondaires (40) se chevauchant les unes les autres au moins par endroits dans une direction axiale (AR),
**caractérisé en ce que** les enroulements secondaires (40) sont réalisés sans chevauchement avec eux-mêmes dans la direction radiale,
l'ordre du chevauchement des enroulements secondaires voisins (40) dans la direction radiale (RR) changeant dans la direction axiale (AR).

2. Dispositif transformateur (10) selon la revendication 1, **caractérisé en ce que** les enroulements secondaires (40) sont entrelacés les uns avec les autres, de préférence entrelacés en forme d'hélice.

3. Dispositif transformateur (10) selon l'une quelconque des revendications précédentes, **caractérisé en ce que** chaque enroulement secondaire (40) présente au moins deux sections axiales (42) espacées axialement et/ou au moins deux sections radiales (44) espacées radialement.

4. Dispositif transformateur (10) selon la revendication 3, **caractérisé en ce que** trois enroulements secondaires (40) avec leurs sections axiales (42) et leurs sections radiales (44) réalisent un paquet d'enroulements secondaires (50).

5. Dispositif transformateur (10) selon l'une quelconque des revendications précédentes, **caractérisé en ce que** les au moins deux enroulements secondaires (40) réalisent un paquet d'enroulements secondaires (50) ; dans lequel au moins deux paquets d'enroulements secondaires (50) sont disposés les uns à côté des autres dans la direction axiale (AR) ou la direction radiale (RR).

6. Dispositif transformateur (10) selon la revendication 5, **caractérisé en ce que** pour chaque paquet d'enroulements secondaires (50), un enroulement primaire (30) séparé est réalisé.

7. Dispositif transformateur (10) selon la revendication 5 ou 6, **caractérisé en ce qu'**une borne d'entrée particulière (20) est réalisée pour chaque paquet d'enroulements secondaires (50).

8. Station de charge (100) destinée au chargement électrique de véhicules avec au moins deux points de charge (110), **caractérisée en ce que** la station de charge (100) présente un dispositif transformateur (10) selon l'une quelconque des revendications 1 à 7.

9. Procédé de fabrication d'un dispositif transformateur (10) d'une station de charge (100) destinée au chargement électrique de véhicules avec au moins deux points de charge (110) ayant les particularités d'une des revendications 1 à 8, présentant les étapes suivantes consistant à :
réaliser un enroulement primaire (30) en connexion électriquement conductrice avec une borne d'entrée (20),
réaliser au moins un enroulement secondaire (40) pour chacun des au moins deux points de charge (110), les enroulements secondaires (40) présentant respectivement au moins deux sections d'enroulement électriquement connectées en parallèle et/ou en série, des sections d'enroulement voisines se chevauchant dans la direction axiale (AR) au moins par endroits,
**caractérisé en ce que** les enroulements secondaires (40) sont isolés galvaniquement les uns par rapport aux autres et sont réalisés sans chevauchement avec eux-mêmes dans la direction radiale, et dans lequel l'ordre du chevauchement d'enroulements secondaires voisins (40) dans la direction radiale (RR) change dans la direction axiale (AR).

10. Procédé selon la revendication 9, **caractérisé en ce qu'**au moins deux enroulements secondaires (40) sont réalisés ensemble sous la forme d'un paquet d'enroulements secondaires (50), au moins deux paquets d'enroulements secondaires (50) étant disposés côte à côte dans la direction axiale (AR) ou la direction radiale (RR).
